# EUROPEAN PATENT APPLICATION

(11) **EP 4 793 624 A1**
(43) Date of publication of application: **19.08.2026**
(21) Application number: 25157975.1
(22) Date of filing: 14.02.2025
(51) Int. Cl.: G01N 15/1031, G01N 22/00, G01N 27/22, B03C 5/00, B03C 5/02, G01N 15/00, G01N 15/10

(54) **DEVICE COMPRISING A PROBE**

(71) Applicant: Universität Linz, 4040 Linz (AT); University of Leeds, Leeds, Yorkshire LS2 9JT (GB)
(72) Inventor: GRAMSE, Georg, 4040 Linz (AT); SPAREY, Maxwell, 4040 Lintz (AT); ACTIS, Paolo, Leeds LS2 9JT (GB); SOULIAS, Dimitrios, Leeds LS2 9JT (GB); WÄLTI, Christoph, Leeds LS2 9JT (GB)
(74) Representative: Burgstaller, Peter

(57) **Abstract**

The invention relates to a device comprising a probe (1), two AC signal sources, and a receiver, wherein the probe (1) is a coaxial probe with two conductors that are separated by a dielectric layer, wherein the first AC signal source provides a first signal in the range of GHz between the two conductors of the probe (1) and the receiver receives a reflected signal of said first signal that is reflected back at the probe (1), and wherein the second AC signal source provides a second signal in the range of kHz to MHz between the two conductors.

## Description

The present invention relates to single-entity dielectric spectroscopy.

Dielectric spectroscopy measures the dielectric properties of a medium as a function of frequency. It is based on the interaction of an external field with the electric dipole moment of the sample, often expressed by permittivity. From the state of the art, it is known to perform measurements on bulk samples, where electrical properties are averaged over a volume of a sample, making it unsuitable for localized measurements with µm or nanometer resolution.

To increase the resolution toward single-entity detection it would be necessary to minimize the size of the tip of the probe, resulting in difficulties in positioning the tip of the probe to particles of interest.

The object of the invention is to provide for single-entity dielectric spectroscopy.

These and other objectives of the invention are provided with a device as claimed in claim 1 and a method as claimed in claim 7.

In one embodiment the device comprises a probe, two AC signal sources and a receiver, wherein the probe is a coaxial probe with two conductors that are separated by a dielectric layer,
wherein the first AC signal source provides a first signal in the range of GHz between the two conductors of the probe and the receiver receives a reflected signal of said first signal that is reflected back at the probe,
and wherein the second AC signal source provides a second signal in the range of kHz to MHz between the two conductors.

Preferably the probe comprises a tip with a diameter in the range of 50 - 2000 nm.

Preferably the device comprises a matching device that matches the impedance of the probe, including its feed line, to the impedance of the first AC signal source.

Preferably the device comprises a diplexer that multiplexes the first signal and the second signal onto a port leading to the probe.

Preferably the device comprises a network analyzer which comprises said first AC signal source and said receiver.

Preferably the second AC signal source is a signal generator with the capability to set properties of frequency and amplitude.

One embodiment is a method for measuring dielectric properties of a restricted sample space with a device that comprises a probe, two AC signal sources and a receiver, wherein the probe is a coaxial probe with two conductors that are separated by a dielectric layer, the method comprising:
providing with the first AC signal source a first signal in the range of GHz between the two conductors of the probe,
receiving with the receiver a reflected signal of said first signal that is reflected back at the probe,
providing with the second AC signal source a second signal in the range of kHz to MHz between the two conductors to attract or repel a dielectric particle that is located in the vicinity of the probe.

Preferably the probe comprises a tip that is located in a liquid sample comprising at least one dielectric particle.

Preferably the impedance of the probe, including its feed line, is matched to the impedance of the first AC signal source.

Preferably the first signal and the second signal are multiplexed to form a third signal that is applied to the probe. Preferably said signal in the range of GHz originates from a network analyzer which also measures the reflected signal as S11 reflection signal.

Preferably the reflected signal is recorded while changing the frequency of the second signal.

Preferably the change of frequency includes at least one frequency at which the dielectric particle is attracted and at least one frequency at which the dielectric particle is repelled.

Preferably the change of frequency includes at least one continuous increase or decrease of the frequency, to determine at least one of the frequencies at which attraction or repulsion occurs.

In one embodiment the second signal is frequency modulated, wherein a modulation frequency at which an alternating transition between attraction and repulsion of the particle occurs is used to characterize the particle's mass.

The present invention makes use of an impedance-matched coaxial nanoelectrode probe, wherein a high frequency signal in the GHz range and a lower-frequency signal in the range of kHz to MHz are applied to the probe at the same time. The tip of the probe is a nanoelectrode that comprises a signal electrode and a ground electrode in coaxial configuration.

Impedance matching with respect to the characteristic instrument impedance of 50 ohms is achieved by careful design of the probe geometry including the dielectric material properties of the probe.

The high frequency signal and the lower-frequency signal are provided by respective sources at the same time. The separation of the two sources allows for independent manipulation of the two frequency bands. As in the state of the art the high frequency signal is used to characterize properties of an analyte, the additional lower-frequency signal is capable of manipulating particles, specifically to attract and/or to repel dielectric particles. In an embodiment of the invention this is used to attract a dielectric analyte towards the probe and to ascertain dielectric properties of the sample in front of the probe. Distance feedback of the dielectric analyte particle with respect to the tip of the probe can be derived from the high-frequency measurement signal that is based on high-frequency reflectometry. The measurement at high-frequency (i.e. GHz) has the advantage of being extremely sensitive for the material properties in front of the coaxial probe due to the resonant detection scheme that is implemented using a matching circuit.

The matching circuit transforms the high impedance at the end of the probe to 50 ohms where the measurement device is extremely sensitive. In its simplest implementation it can be 50-ohm shunt, but also stub-tuning or interferometric matching using a 180°-hybrid-coupler can be implemented. This is not meant to be limiting; other known suitable devices or circuits can also be used.

The present device or method allows for controlled manipulation of the dielectric analyte particle in the measured solute, since the approach and the presence of the dielectric analyte particle can be confirmed. Simultaneously dielectric properties of the particle can be measured.

The particles can be manipulated by changing the frequency of the lower-frequency signal, since a particle can be attracted at lower frequencies and repelled at higher frequencies. For example, a frequency of about 10 kHz can be suited to attract a particle and a frequency of about 10 MHz can be suited to repel the particle.

The behavior of a particle with regard to frequency dependent attraction and repulsion is depending on the particle size, besides its complex dielectric permittivity (including also dielectric loss). By varying the frequency of the lower-frequency signal information on properties of the particle can be derived from the high-frequency measurement signal.

The kHz to MHz signal is preferably provided by a lower-frequency AC source unit.

The high-frequency signal is preferably provided by a network analyzer. The network analyzer sends out the high-frequency signal, i.e. the GHz signal, to the probe and measures the back-reflected GHz signal, the so called S11 reflection parameter, that is proportional to the complex impedance sensed by the probe (i.e. local capacitance and conductance).

When the impedance of the probe is matched to the impedance of the network analyzer using the matching circuit, the system becomes sensitive to even extremely small changes of the probe impedance (as small as at to Farads, 10^-18 Farads). A change of dielectric properties of the sample in front of the probe leads to a change of the actual impedance of the probe. The further the actual impedance of the sample deviates from the previously matched impedance, the larger the reflected signal becomes.

The probe is a coaxial probe with an inner electrode diameter in the range of 50 - 2000 nm. For comparison: Known probes from current applications of dielectric spectroscopy have a diameter of about 2 mm.

The dielectric analyte particle is preferable contained in a liquid sample, like water or a water-based liquid. The dielectric analyte particle is moveable in the liquid sample. The liquid sample can contain one type of analyte particles or the liquid sample can contain many types of particles. If the analyte particle is known, the present invention can be used to detect the presence of the analyte particle in a sample. Else the present invention can be used to measure the dielectric properties and mass of particles contained in the sample to allow for identification of particles contained in the sample.

For example, the present invention can be used to search for a target virus in a sample or the present invention can be used to make measurements on many dielectric particles contained in the sample to decern them with respect to their dielectric properties and/or size.

In one embodiment a single probe is mounted to an XYZ micromanipulation stage. The micromanipulation stage can be used to transport particles that are attracted towards the probe to any position of the sample. The particles can be repelled at any location of the sample. The micromanipulation stage can be of a microscope, for example a bright field microscope, to allow for optical observation of the tip of the probe and particles in the sample.

In another embodiment multiple probes are mounted on a common support to allow for multi-probe measurements on a single sample. For example, the probes can be operated at different lower-frequency signals to attract different kinds of particles. Another example is to move a single particle from one probe to the next by repelling the particle form a first probe and attracting the particle with a second probe. In this way a particle can also be moved between two probes repeatedly, while measuring dielectric properties of the sample in front of the probes with the high-frequency signal.

In one embodiment the lower-frequency signal is provided as a signature signal by changing the instantaneous frequency of the lower-frequency signal, between attractive and repulsive regimes at a certain modulation frequency, while recording the movement of the particle. From the movement of the particle in correlation to the instantaneous frequency and the modulation frequency, conclusions can be drawn about the properties of the particle, including the mass of the particle.

In other words, the second signal is frequency modulated in an embodiment, whereby a modulation frequency is used at which an alternating transition between attraction and repulsion of the particle occurs. The modulation frequency can be set to a predefined value or changed until alternating transition between attraction and repulsion of the particle occurs. The modulation frequency at which an alternating transition between attraction and repulsion of the particle occurs can be used to characterize the particle's mass. The occurrence of alternating transition between attraction and repulsion is detectable in the reflected signal.

In another embodiment a dielectric particle is used as carrier for a molecule. The carrier is used to attract the molecule to the probe. Further the carrier can be used to transport and position the molecule to a target location. Different dielectric particles can be attached to different molecules. Different dielectric particles can be attracted and repulsed at different frequencies.

The whole process can be monitored or recorded with the high-frequency part of the measurement setup.

The invention is illustrated by way of example by reference to the accompanying drawings.

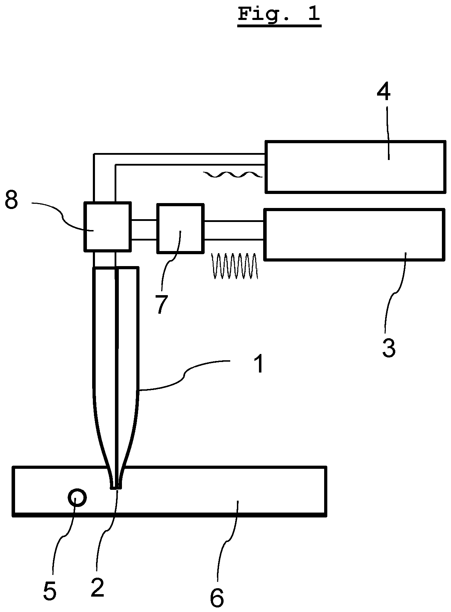

- Fig. 1:: Shows a schematic view of a measurement setup according to the invention.

The device of Fig. 1 comprises a probe 1 with a tip 2. The probe 1 is a coaxial probe with an inner conductor and an outer conductor that are separated by a dielectric layer. The probe 1 can be provided by locally constricting the diameter of a coaxial conductor and by cutting or breaking the coaxial conductor at the location of the maximal constriction. The resulting probe 1 with a larger-diameter upper part and very small and at the very end approximately disk-shaped tip 2 is illustrated in Fig. 1.

Two signals are applied between the inner conductor and the outer conductor. The first signal is a high-frequency signal in the GHz-range. The second signal is a lower-frequency signal in the range of kHz to MHz. The terms lower frequency and high frequency only reflect the relationship between the two signals in the sense of the present invention. The GHz-range includes frequencies between 1 GHz and 1 THz. The frequency or first signal is preferably selected from a range of 1 GHz to 50 GHz, in particular from a range of 5 GHz to 25 GHz.

The range of kHz to MHz includes frequencies between 1 kHz and 0.1 GHz. The frequency or frequency band of the second signal is preferably selected from a range of 1 kHz to 10 MHz, in particular from a range of 10 kHz to 5 MHz.

The high-frequency signal and the lower-frequency signal are preferably provided by two distinct devices. In other embodiment the both signals can be provided by a single device, which is capable of providing both signals on one or two ports.

In the example of Fig. 1 the high-frequency signal is provided by a network analyzer 3, which comprises a signal generator and receiver that makes the measurements. Alternatively, the signal generator can be a stand-alone device which is controlled by the network analyzer 3. Another option is a network analyzer 3 that comprises two built-in signal generators, for example to provide both the high-frequency signal and the lower-frequency signal.

Preferably a matching device 7 is located between the probe 1 and the network analyzer 3. The matching device 7 (also called matching network) is used to match the impedance of the probe, including its feed line, to the impedance of the network analyzer 3. The matching device 7 is used to match the impedances before a measurement is made. The match can occur once when setting up the device. Alternatively, if the matching device 7 is adjustable, the match can be done before making measurements with the device.

Preferably the device comprises a diplexer 8, that multiplexes the high-frequency signal and the lower-frequency signal onto a port leading to the probe 1. The diplexer 8 preferably comprises three ports to connect three coaxial cables leading to the AC source unit 4, the network analyzer 3 and the probe 1. The ports can be arranged in the shape of a T. The term diplexer 8 is not to be understood as limiting; other electronic components can also be used which enable the combination of the lower-frequency signal and the high-frequency signal to form a third signal applied to the probe 1.

The network analyzer 3, AC source unit 4, matching device 7, and diplexer 8 may be integrated into a single circuit or device, that fulfills the functions of providing and multiplexing the lower-frequency signal and the high-frequency signal, matching the impedance of the probe 1 and measuring the reflected signal of the high-frequency signal that is reflected back at the probe 1.

In the example of Fig. 1 the lower-frequency signal is provided by an AC source unit 4, which is capable of applying at least two different frequencies, one for attraction and another for repulsion. The AC source unit 4 can be a signal generator, with the capability to set properties of frequency and amplitude and optionally wave shape.

By applying the kHz to MHz signal to the probe 1 a non-uniform electrical field is generated between the signal and ground electrode of the probe 1. The signal electrode is usually the end of the inner conductor and the ground electrode the end of the outer conductor of the coaxial probe. The non-uniform electrical field induces a frequency-dependent dielectrophoretic force capable of attraction or repelling a dielectric particle 5 that is present in a liquid sample 6. The dielectric particle 5 or dielectric analyte can be in the range of micrometer to nanometer size. The attraction or repelling is achieved by polarization of the particle 5. The liquid sample 6 may consist of a solvent.

Simultaneously the high-frequency network analyzer 3 uses high-frequency reflectometry to ascertain dielectric properties of a restricted sample space of the sample 6 in front of the tip 2 of the probe 1, which dielectric properties are influenced by the dielectric particle 5 as soon as it reaches the restricted sample space. The high-frequency network analyzer 3 therefore is able to detect the approach of a particle and/or to perform measurements on a particle 5 already attached to the tip 2 of the probe 1.

The particle 5 can be a virus to enable single virus detection. The attractive or repulsive force is due to membrane proteins that possess dielectric moments.

Due to the ability to detect individual entities, the present invention is suitable for detecting smallest concentrations in a medium. The signal of other detection methods is often gained by measuring a larger sample area so that the signal contains the response of many particles.

## Claims

1. A device comprising a probe (1), two AC signal sources and a receiver, wherein the probe (1) is a coaxial probe with two conductors that are separated by a dielectric layer,
wherein the first AC signal source provides a first signal in the range of GHz between the two conductors of the probe and the receiver receives a reflected signal of said first signal that is reflected back at the probe (1);
and wherein the second AC signal source provides a second signal in the range of kHz to MHz between the two conductors.

2. The device as claimed in claim 1, **characterized in that** the probe (1) comprises a tip (2) with a diameter in the range of 50 - 2000 nm.

3. The device as claimed in any one of claims 1 to 2, **characterized in that** it comprises a matching device (7) that matches the impedance of the probe (1), including its feed line, to the impedance of the first AC signal source.

4. The device as claimed in any one of claims 1 to 3, **characterized in that** it comprises a diplexer (8) that multiplexes the first signal and the second signal onto a port leading to the probe (1).

5. The device as claimed in any one of claims 1 to 4, **characterized in that** it comprises a network analyzer (3) which comprises said first AC signal source and said receiver.

6. The device as claimed in any one of claims 1 to 5, **characterized in that** the second AC signal source is a signal generator with the capability to set properties of frequency and amplitude.

7. A method for measuring dielectric properties of a restricted sample space with a device that comprises a probe (1), two AC signal sources and a receiver, wherein the probe (1) is a coaxial probe with two conductors that are separated by a dielectric layer, the method comprising:
providing with the first AC signal source a first signal in the range of GHz between the two conductors of the probe (1);
receiving with the receiver a reflected signal of said first signal that is reflected back at the probe (1);
providing with the second AC signal source a second signal in the range of kHz to MHz between the two conductors to attract or repel a dielectric particle (5) that is located in the vicinity of the probe (1).

8. The method as claimed in claim 7, **characterized in that** the probe (1) comprises a tip (2) that is located in a liquid sample (6) comprising at least one dielectric particle (5).

9. The method as claimed in any one of claims 7 to 8, **characterized in that** the impedance of the probe (1), including its feed line, is matched to the impedance of the first AC signal source.

10. The method as claimed in any one of claims 7 to 9, **characterized in that** the first signal and the second signal are multiplexed to form a third signal that is applied to the probe (1).

11. The method as claimed in any one of claims 7 to 10, **characterized in that** said signal in the range of GHz originates from a network analyzer (3) which also measures the reflected signal as S11 reflection signal.

12. The method as claimed in any one of claims 7 to 11, **characterized in that** the reflected signal is recorded while changing the frequency of the second signal.

13. The method as claimed in claim 12, **characterized in that** the change of frequency includes at least one frequency at which the dielectric particle (5) is attracted and at least one frequency at which the dielectric particle (5) is repelled.

14. The method as claimed in claim 12, **characterized in that** the change of frequency includes at least one continuous increase or decrease of the frequency, to determine at least one of the frequencies at which attraction or repulsion occurs.

15. The method as claimed in one of claims 7 to 14, **characterized in that** the second signal is frequency modulated, wherein a modulation frequency at which an alternating transition between attraction and repulsion of the particle occurs is used to characterize the particle's mass.
